# EUROPÄISCHE PATENTSCHRIFT

(11) **EP 0 971 974 B1**
(45) Veröffentlichungstag und Bekanntmachung des Hinweises auf die Patenterteilung: **09.01.2002**
(21) Anmeldenummer: 97929275.2
(22) Anmeldetag: 24.06.1997
(51) Int. Cl.: C08J 7/04, C09D 4/02

(54) **KRATZFEST BESCHICHTETE PLATTE AUS EINEM KRISTALLISIERBAREN THERMOPLAST**
PLATE, MADE FROM CRYSTALLIZABLE THERMOPLASTIC, WITH A SCRATCH-RESISTANT COATING
PLAQUE EN THERMOPLASTIQUE CRISTALLISABLE, MUNIE D'UN REVETEMENT RESISTANT A L'ABRASION

(30) Priorität: 26.06.1996 DE 19625534
(43) Veröffentlichungstag der Anmeldung: 19.01.2000
(73) Patentinhaber: Hostaglas Ltd., Dublin 24 (IE)
(72) Erfinder: MURSCHALL, Ursula, D-55283 Nierstein (DE); BRUNOW, Rainer, D-65817 Eppstein (DE); SCHORNING, Martin, D-65779 Kelkheim (DE)
(74) Vertreter: Grünecker, Kinkeldey, Stockmair & Schwanhäusser Anwaltssozietät
(86) Internationale Anmeldenummer: EP9703301
(87) Internationale Veröffentlichungsnummer: WO9749550

(56) Entgegenhaltungen:
- EP-A- 0 188 753
- EP-A- 0 317 134
- EP-A- 0 445 744
- GB-A- 2 197 881
- US-A- 4 391 767

## Beschreibung

Die Erfindung betrifft eine Platte aus einem kristallisierbaren Thermoplast, deren Dicke im Bereich von 1 bis 20 mm liegt und die mindestens eine kratzfest beschichtete Oberfläche aufweist. Die Platte zeichnet sich durch gute optische sowie gute mechanische Eigenschaften aus.

In der EP-A-0 471 528 wird ein Verfahren zum Formen eines Gegenstandes aus einer Polyethylenterephthalat (PET)-Platte beschrieben. Die PET-Platte wird in einer Tiefziehform beidseitig in einem Temperaturbereich zwischen der Glasübergangstemperatur und der Schmelztemperatur wärmebehandelt. Die geformte PET-Platte wird aus der Form herausgenommen, wenn das Ausmaß der Kristallisation der geformten PET-Platte im Bereich von 25 bis 50 % liegt. Die in der EP-A-0 471 528 offenbarten PET-Platten haben eine Dicke von 1 bis 10 mm. Da der aus der PET-Platte hergestellte, tiefgezogene Formkörper teilkristallin und damit nicht mehr transparent ist und die Oberflächeneigenschaften des Formkörpers durch das Tiefziehverfahren, die dabei gegebenen Temperaturen und Formen bestimmt werden, ist es unwesentlich, welche optischen Eigenschaften (z. B. Glanz, Trübung und Lichttransmission) die eingesetzten PET-Platten besitzen. In der Regel sind die optischen Eigenschaften dieser Platten schlecht und optimierungsbedürftig. Die Platten enthalten keine Additive und sind ebenfalls nicht beschichtet.

In der US-A-3,496,143 wird das Vakuum-Tiefziehen einer 3 mm dicken PET-Platte, deren Kristallisation im Bereich von 5 bis 25 % liegen sollte, beschrieben. Die Kristallinität des tiefgezogenen Formkörpers ist größer als 25%. Auch an diese PET-Platten werden keine Anforderungen hinsichtlich der optischen Eigenschaften gestellt. Da die Kristallinität der eingesetzten Platten bereits zwischen 5% und 25% liegt, sind diese Platten trüb und undurchsichtig. Die Platten enthalten keinen Farbstoff und keinerlei organische oder anorganische Pigmente als Farbmittel. Auch diese Platten enthalten keine Additive und sind nicht beschichtet.

In den nicht offengelegten deutschen Patentanmeldungen 195 22 118.48, 195 22 120.6 und 195 22 119.2 werden amorphe Platten mit einer Dicke im Bereich von 1 bis 20 mm beschrieben, die als Hauptbestandteil einen kristallisierbaren Thermoplast enthalten und dadurch gekennzeichnet sind, daß sie mindestens einen UV-Stabilisator als Lichtschutzmittel enthalten. Die Platten zeichnen sich neben der hohen UV-Stabilität sowohl durch gute optische Eigenschaften, als auch durch gute mechanische Eigenschaften aus. Die Platten sind aber nicht beschichtet und damit weder kratz- noch abriebfest.

Aufgabe der vorliegenden Erfindung war es daher, eine amorphe Platte aus einem kristallisierbaren Thermoplast mit einer Dicke im Bereich von 1 bis 20 mm bereitzustellen, die neben guten optischen sowie guten mechanischen Eigenschaften mindestens eine kratzfeste Oberfläche aufweist.

Unter kratzfester Oberfläche versteht man, daß der Oberflächenglanz der kratzfesten Oberfläche bei dem Taber-Abrieb-Test (ASTM D 1044) nach 50 Umdrehungszyklen bei einem Belastungsgewicht von 750 g bei einer Umdrehungsgeschwindigkeit von 60 UpM bei größer 30 und vorzugsweise größer 40 liegt. Im Falle von transparenten Platten versteht man unter kratzfester Oberfläche, daß neben dem Oberflächenglanz die Trübungsdifferenz (Δ-Trübung) vor und nach dem Taber-Abrieb-Test bei kleiner 30, vorzugsweise bei kleiner 20 liegt.

Zu den guten optischen Eigenschaften der amorphen Platte zählt beispielsweise ein hoher Oberflächenglanz und daß die Platte keine Oberflächendefekte wie Pickel, Stippen, Streifen und/oder Schlieren aufweist. Im Falle von transparenten Platten zählt zu den guten optischen Eigenschaften der amorphen Platte eine hohe Lichttransmission, eine niedrige Trübung und eine hohe Bildschärfe (Clarity), wohingegen im Falle von eingefärbten Platten eine homogene, streifenfreie Einfärbung zu den guten optischen Eigenschaften gehört.

Zu den guten mechanischen Eigenschaften zählt unter anderem eine hohe Schlagzähigkeit sowie eine hohe Bruchfestigkeit.

Gelöst wird die Aufgabe durch eine amorphe Platte mit einer Dicke im Bereich von 1 bis 20 mm, die als Hauptbestandteil einen kristallisierbaren Thermoplasten enthält, die dadurch gekennzeichnet ist, daß die Platte mindestens einseitig eine siliciumhaltige und/oder acrylhaltige Beschichtung aufweist. Die Dicke der Beschichtung liegt vorzugsweise im Bereich von 1 bis 50 µm.

Die amorphe, kristallisierbare Platte enthält als Hauptbestandteil einen kristallisierbaren Thermoplasten. Bevorzugte kristallisierbare bzw. teilkristalline Thermoplaste sind beispielsweise Polyethylenterephthalat, Polybutylenterephthalat, Polyethylennaphthalat, Polybutylennaphthalat oder Mischungen daraus, wobei das Polyethylenterephthalat (PET) besonders bevorzugt ist,

Polyethylenterephthalate mit einem Kristallitschmelzpunkt Tₘ, gemessen mit DSC (Differential Scanning Calorimetry) mit einer Aufheizgeschwindigkeit von 10°C/min, von 240°C bis 280°C, vorzugsweise von 250°C bis 270°C, mit einem Kristallisationstemperaturbereich T_{c} zwischen 75°C und 280°C, einer Glasübergangstemperatur T_{g} zwischen 65°C und 90°C und mit einer Dichte, gemessen nach DIN 53479, von 1,30 bis 1,45 g/cm³ und einer Kristallinität zwischen 25 % und 65 % stellen als Ausgangsmaterialien zur Herstellung der Platte bevorzugte Polymere dar.

Die Standardviskosität SV (DCE) des Polyethylenterephthalats, gemessen in Dichloressigsäure nach DIN 53728, liegt zwischen 800 und 6000, vorzugsweise zwischen 950 und 5000 und besonders bevorzugt zwischen 1000 und 4000.

Die intrinsische Viskosität IV (DCE) berechnet sich wie folgt aus der Standardviskosität SV (DCE):${\text{IV (DCE) = 6,67 • 10}}^{\text{-4}} \text{SV (DCE) + 0,118}$

Das Schüttgewicht, gemessen nach DIN 53466, liegt vorzugsweise zwischen 0,75 kg/dm³ und 1,0 kg/dm³, und besonders bevorzugt zwischen 0,80 kg/dm³ und 0,90 kg/dm³.

Die Polydispersität des Polyethylenterephthalats M_{w}/Mₙ gemessen mittels GPC liegt vorzugsweise zwischen 1,5 und 4,0 und besonders bevorzugt zwischen 2,0 und 3,5.

Erfindungsgemäß versteht man unter kristallisierbarem Polyethylenterephthalat
- kristallisierbare Polyethylenterephthalat-Homopolymere,
- kristallisierbare Polyethylenterephthalat-Copolymere,
- kristallisierbare Polyethylenterephthalat-Compounds,
- kristallisierbares Polyethylenterephthalat-Recyklat und
- andere Variationen von kristallisierbarem Polyethylenterephthalat.

Unter amorpher Platte werden im Sinne der vorliegenden Erfindung solche Platten verstanden, die, obwohl der eingesetzte, kristallisierbare Thermoplast vorzugsweise eine Kristallinität zwischen 25 und 65 % besitzt, nicht kristallin sind. Nicht kristallin, d.h. im wesentlichen amorph bedeutet, daß der Kristallinitätsgrad im allgemeinen unter 5 %, vorzugsweise unter 2 % liegt und besonders bevorzugt 0 % beträgt.

Die Herstellung der amorphen, kristallisierbaren Platten wird beispielsweise in den nicht offengelegten, deutschen Patentanmeldungen 195 19 579.5, 195 19 578.7, 195 19 577.9, 195 22 118.4, 195 22 120.6, 195 22 119.2, 195 28 336.8, 195 28 334.1 und 195 28 333.3 beschrieben.

Die amorphe Platte kann dabei sowohl transparent, transparent eingefärbt oder gedeckt eingefärbt sein.

In der transparenten Ausführungsform weist die amorphe, beschichtete Platte einen Oberflächenglanz, gemessen nach DIN 67530 (Meßwinkel 20°) auf, der größer als 90, vorzugsweise größer als 100 ist. Die Lichttransmission, gemessen nach ASTM D 1003 beträgt mehr als 80 %, vorzugsweise mehr als 82 % und die Trübung der Platte, ebenfalls gemessen nach ASTM D 1003 beträgt weniger als 15 %, vorzugsweise weniger als 11 %.

In der transparent eingefärbten Ausführungsform enthält die amorphe Platte mindestens einen löslichen Farbstoff. Die Konzentration an löslichem Farbstoff liegt dabei vorzugsweise im Bereich von 0,001 bis 20 Gew.-%, bezogen auf das Gewicht des Polyethylenterephthalats.

Unter löslichen Farbstoffen versteht man Substanzen, die im Polymeren molekular gelöst sind (DIN 55949).

Die farbliche Veränderung als Folge der Einfärbung der amorphen Platte beruht auf der wellenlängenabhängigen Absorption und/oder Streuung des Lichts.

Farbstoffe können Licht nur absorbieren, nicht streuen, da die physikalische Voraussetzung für Streuung eine bestimmte Teilchenmindestgröße ist.

Bei der Einfärbung mit Farbstoffen handelt es sich um einen Lösungsprozeß. Als Ergebnis dieses Lösungsprozesses ist der Farbstoff molekular beispielsweise in dem PET-Polymeren gelöst. Derartige Einfärbungen werden als transparent oder durchscheinend oder transluzent oder opal bezeichnet.

Von den verschiedenen Klassen der löslichen Farbstoffe werden besonders die fett- und aromatenlöslichen Farbstoffe bevorzugt. Dabei handelt es sich beispielsweise um Azo- und Anthrachinonfarbstoffe. Sie eignen sich insbesondere zur Einfärbung von PET, da aufgrund der hohen Glasübergangstemperatur von PET, die Migration des Farbstoffes eingeschränkt ist. (Literatur J. Koerner: Lösliche Farbstoffe in der Kunststoffindustrie in VDI-Gesellschaft Kunststofftechnik: Einfärben von Kunststoffen, VDI-Verlag, Düsseldorf 1975).

Geeignete lösliche Farbstoffe sind beispielsweise: Solventgelb 93 ein Pyrazolonderivat, Solventgelb 16 ein fettlöslicher Azo-Farbstoff, Fluorolgrüngold ein fluoreszierender polycyclischer Farbstoff, Solventrot 1 ein Azofarbstoff, Azofarbstoffe wie Thermoplastrot BS, Sudanrot BB, Solventrot 138 ein Anthrachinonderivat, fluoreszierende Benzopyranfarbstoffe wie Fluorolrot GK und Fluorolorange GK, Solventblau 35 ein Anthrachinonfarbstoff, Solventblau ein Phthalocyaninfarbstoff und viele andere. Geeignet sind auch Mischungen von zwei oder mehreren dieser löslichen Farbstoffe.

Erfindungsgemäß kann der lösliche Farbstoff in der gewünschten Konzentration bereits beim Rohstoffhersteller zudosiert werden oder bei der Plattenherstellung in den Extruder dosiert werden.

Besonders bevorzugt wird aber die Zugabe des Farbadditives über die Masterbatchtechnologie. Der lösliche Farbstoff wird in einem festen Trägermaterial voll dispergiert und/oder gelöst. Als Trägermaterial kommen gewisse Harze, das einzufärbende Polymere selbst oder auch andere Polymere, die mit dem einzufärbenden Polymeren ausreichend verträglich sind, in Frage.

Wichtig ist, daß die Korngröße und das Schüttgewicht des Masterbatches ähnlich der Korngröße und dem Schüttgewicht des Polyethylenterephthalats sind, so daß eine homogene Verteilung und damit eine homogene, transparente Einfärbung erfolgen kann.

Der Oberflächenglanz der transparent eingefärbten, beschichteten Platte, gemessen nach DIN 67530 (Meßwinkel 20°) ist größer als 80, vorzugsweise größer als 90, die Lichttransmission, gemessen nach ASTM D 1003, liegt im Bereich von 5 bis 80 %, vorzugsweise im Bereich von 10 bis 70 % und die Trübung der Platte, gemessen nach ASTM D 1003, liegt im Bereich von 2 bis 40 %, vorzugsweise im Bereich von 3 bis 35 %.

In der gedeckt eingefärbten Ausführungsform enthält die amorphe Platte mindestens ein organisches und/oder anorganisches Pigment als Farbmittel. Die Konzentration des Farbmittels liegt vorzugsweise im Bereich von 0,5 bis 30 Gew.-%, bezogen auf das Gewicht des Polyethylenterephthalats.

Bei den Farbmitteln unterscheidet man nach DIN 55944 zwischen Farbstoffen und Pigmenten. Pigmente sind unter den jeweiligen Verarbeitungsbedingungen im Polymeren nahezu unlöslich, während Farbstoffe löslich sind (DIN 55949). Die färbende Wirkung der Pigmente wird durch die Teilchen selbst verursacht. Der Begriff Pigment ist im allgemeinen an eine Teilchengröße von 0,01 µm bis 1,0 µm gebunden. Nach DIN 53206 unterscheidet man bei der Definition der Pigmentteilchen zwischen Primärteilchen, Aggregaten und Agglomeraten.

Primärteilchen, wie sie in der Regel bei der Herstellung anfallen, besitzen aufgrund ihrer außerordentlich geringen Teilchengröße eine ausgeprägte Tendenz, sich zusammenzulagern. Dadurch entstehen aus den Primärteilchen durch flächiges Zusammenlagern die Aggregate, die deshalb eine kleinere Oberflächen aufweisen als der Summe der Oberfläche ihrer Primärteilchen entspricht. Durch Aneinanderlagerung von Primärteilchen und/oder Aggregaten über Ecken und Kanten bilden sich Agglomerate, deren Gesamtoberflächen von der Summe der Einzelflächen nur wenig abweicht. Wenn man - ohne nähere Angaben - von Pigmentteilchengröße spricht, bezieht man sich auf die Aggregate, wie sie im wesentlichen nach der Einfärbung vorliegen.

In pulverförmigen Pigmenten sind die Aggregate stets zu Agglomeraten zusammengelagert, die bei der Einfärbung zerteilt, vom Kunststoff benetzt und homogen verteilt werden müssen. Diese gleichzeitig ablaufenden Vorgänge werden als Dispergierung bezeichnet. Bei der Einfärbung mit Farbstoffen handelt es sich demgegenüber um einen Lösungsprozeß, als dessen Ergebnis der Farbstoff molekular gelöst vorliegt.

Im Gegensatz zu den anorganischen Pigmenten ist bei einzelnen organischen Pigmenten eine völlige Unlöslichkeit nicht gegeben, insbesondere nicht bei einfach aufgebauten Pigmenten mit niedrigen Molekulargewichten.

Farbstoffe sind durch ihre chemische Struktur ausreichend beschrieben. Pigmente jeweils gleicher chemischer Zusammensetzung können jedoch in verschiedenen Kristallmodifikationen hergestellt werden und vorliegen. Ein typisches Beispiel dafür ist das Weißpigment Titandioxid, das in der Rutilform und in der Anatasform vorliegen kann.

Bei Pigmenten kann durch Coatung, d.h. durch Nachbehandlung der Pigmentteilchenoberfläche, mit organischen oder anorganischen Mitteln eine Verbesserung der Gebrauchseigenschaften erzielt werden. Diese Verbesserung liegt insbesondere in der Erleichterung der Dispergierung und in der Anhebung der Licht-, Wetter- und Chemikalienbeständigkeit. Typische Coatungsmittel für Pigmente sind beispielsweise Fettsäuren, Fettsäureamide, Siloxane und Aluminiumoxide.

Geeignete anorganische Pigmente sind beispielsweise die Weißpigmente Titandioxid, Zinksulfid und Zinnsulfid, die organisch und/oder anorganisch gecoated sein können.

Die Titandioxidteilchen können aus Anatas oder Rutil bestehen, vorzugsweise überwiegend aus Rutil, welcher im Vergleich zu Anatas eine höhere Deckkraft zeigt. In bevorzugter Ausführungsform bestehen die Titandioxidteilchen zu mindestens 95 Gew.-% aus Rutil. Sie können nach einem üblichen Verfahren, z.B. nach dem Chlorid- oder dem Sulfat-Prozeß, hergestellt werden. Die mittlere Teilchengröße ist relativ klein und liegt vorzugsweise im Bereich von 0,10 bis 0,30 µm.

Durch Titandioxid der beschriebenen Art entstehen innerhalb der Polymermatrix keine Vakuolen während der Plattenherstellung.

Die Titandioxidteilchen können einen Überzug aus anorganischen Oxiden besitzen, wie er üblicherweise als Überzug für TiO₂-Weißpigment in Papieren oder Anstrichmitteln zur Verbesserung der Lichtechtheit eingesetzt wird. TiO₂ ist bekanntlich photoaktiv. Bei Einwirkung von UV-Strahlen bilden sich freie Radikale auf der Oberfläche der Partikel. Diese freien Radikale können zu den filmbildenden Bestandteilen der Anstrichmittel wandern, was zu Abbaureaktionen und Vergilbung führt. Zu den besonders geeigneten Oxiden gehören die Oxide von Aluminium, Silicium, Zink oder Magnesium oder Mischungen aus zwei oder mehreren dieser Verbindungen. TiO₂-Partikel mit einem Überzug aus mehreren dieser Verbindungen werden z.B. in der EP-A-0 044 515 und der EP-A-0 078 633 beschrieben. Weiterhin kann der Überzug organische Verbindungen mit polaren und unpolaren Gruppen enthalten. Die organischen Verbindungen müssen bei der Herstellung der Platte durch Extrusion der Polymerschmelze ausreichend thermostabil sein. Polare Gruppen sind beispielsweise -OH, -OR, -COOX, (X = R, H oder Na, R = Alkyl mit 1 bis 34 C-Atomen). Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie z.B. Polydimethylsiloxan und Polymethylhydrogensiloxan.

Der Überzug auf den Titandioxidteilchen besteht gewöhnlich aus 1 bis 12 g, insbesondere 2 bis 6 g anorganischer Oxide und 0,5 bis 3 g, insbesondere 0,7 bis 1,5 g organischer Verbindungen, bezogen auf 100 g Titandioxidteilchen. Der Überzug wird auf die Teilchen vorzugsweise in wäßriger Suspension aufgebracht. Die anorganischen Oxide werden aus wasserlöslichen Verbindungen, z.B. Alkali-, insbesondere Natriumaluminat, Aluminiumhydroxid, Aluminiumsulfat, Aluminiumnitrat, Natriumsilikat (Wasserglas) oder Kieselsäure in der wäßrigen Suspension ausgefällt.

Unter anorganischen Oxiden wie Al₂O₃ und SiO₂ sind auch die Hydroxide oder deren verschiedenen Entwässerungsstufen wie z.B. Oxidhydrate zu verstehen, ohne daß man deren genaue Zusammensetzung und Struktur kennt. Auf das TiO₂-Pigment werden nach dem Glühen und Mahlen in wäßriger Suspension die Oxidhydrate z.B. des Aluminiums und/oder Siliciums gefällt, die Pigmente dann gewaschen und getrocknet. Diese Ausfällung kann somit direkt in einer Suspension geschehen, wie sie im Herstellungsprozeß nach dem Glühen und der sich anschließenden Naßmahlung anfällt. Die Ausfällung der Oxide und/oder Oxidhydrate der jeweiligen Metalle erfolgt aus den wasserlöslichen Metallsalzen im bekannten pH-Bereich, für das Aluminium wird beispielsweise Aluminiumsulfat in wäßriger Lösung (pH kleiner 4) eingesetzt und durch Zugabe von wäßriger Ammoniaklösung oder Natronlauge im pH-Bereich zwischen 5 und 9, vorzugsweise zwischen 7 und 8,5, das Oxidhydrat gefällt. Geht man von einer Wasserglas- oder Alkalialuminatlösung aus, sollte der pH-Wert der vorgelegten TiO₂-Suspension im stark alkalischen Bereich (pH größer 8) liegen. Die Ausfällung erfolgt dann durch Zugabe von Mineralsäure wie Schwefelsäure im pH-Bereich von 5 bis 8. Nach der Ausfällung der Metalloxide wird die Suspension noch 15 Minuten bis etwa 2 Stunden gerührt, wobei die ausgefällten Schichten eine Alterung erfahren. Das beschichtete Produkt wird von der wäßrigen Dispersion abgetrennt und nach dem Waschen bei erhöhter Temperatur, insbesondere bei 70 bis 110°C, getrocknet.

Typische anorganische Schwarzpigmente sind Rußmodifikationen, die ebenfalls gecoated sein können, Kohlenstoffpigmente die sich von den Rußpigmenten durch einen höheren Aschegehalt unterscheiden und oxidische Schwarzpigmente wie Eisenoxidschwarz sowie Kupfer-, Chrom- und Eisenoxid-Mischungen (Mischphasenpigmente).

Geeignete anorganische Buntpigmente sind oxidische Buntpigmente, hydroxylhaltige Pigmente, sulfidische Pigmente und Chromate.

Beispiele für oxidische Buntpigmente sind Eisenoxidrot, Titandioxid-Nickeloxid-Antimonoxid-Mischphasenpigmente, Titandioxid-Chromoxid, Antimonoxid-Mischphasenpigmente, Mischungen der Oxide von Eisen, Zink und Titan, Chromoxid, Eisenoxidbraun, Spinelle des Systems Kobalt-Aluminium-Titan-Nickel-Zinkoxid und Mischphasenpigmente auf Basis von anderen Metalloxiden.

Typische hydroxylhaltige Pigmente sind beispielsweise Oxid-Hydroxide des dreiwertigen Eisens wie FeOOH.

Beispiele für sulfidische Pigmente sind Cadmium-Sulfid-Selenide, Cadmium-Zinksulfide, Natrium-Aluminium-Silikat mit polysulfidartig gebundenem Schwefel im Gitter.

Beispiele für Chromate sind die Bleichromate, die in den Kristallformen monoklin, rhombisch und tetragonal vorliegen können.

Alle Buntpigmente können wie die Weiß- und Schwarzpigmente sowohl ungecoated als auch anorganisch und/oder organisch gecoated vorliegen.

Die organischen Buntpigmente teilt man in der Regel in Azopigmente und sogenannte Nicht-Azopigmente auf.

Charakteristisch für die Azopigmente ist die Azo (-N=N-)-Gruppe. Azopigmente können Monoazopigmente, Diazopigmente, Diazokondensationspigmente, Salze von Azofärbsäuren und Mischungen aus den Azopigmenten sein.

Die amorphe, gedeckt eingefärbte Platte enthält mindestens ein anorganisches und/oder organisches Pigment. In speziellen Ausführungsformen kann die amorphe Platte auch Mischungen aus anorganischen und/oder organischen Pigmenten sowie zusätzlich lösliche Farbstoffe enthalten. Die Konzentration des löslichen Farbstoffes liegt dabei vorzugsweise im Bereich von 0,01 bis 20 Gew.-%, besonders bevorzugt im Bereich von 0,5 bis 10 Gew.-% bezogen auf das Gewicht des Polyethylenterephthalats.

Erfindungsgemäß können die Farbmittel (anorganische und/oder organische Pigmente sowie gegebenenfalls Farbstoffe) in der gewünschten Konzentration bereits beim Rohstoffhersteller zudosiert werden oder bei der Plattenherstellung in den Extruder dosiert werden.

Besonders bevorzugt wird aber die Zugabe der/des Farbadditive(s) über die Masterbatchtechnologie oder über die Fest-Pigment-Präparation. Das organische und/oder anorganische Pigment sowie gegebenenfalls der lösliche Farbstoff werden in einem festen Trägermaterial voll dispergiert. Als Träger kommen gewisse Harze, das einzufärbende Polymere selbst oder auch andere Polymere, die mit dem einzufärbenden Polymeren ausreichend verträglich sind, in Frage. Wichtig ist, daß die Korngröße und das Schüttgewicht des Fest-Pigment-Präparates oder des Masterbatches ähnlich der Korngröße und dem Schüttgewicht des Polylethylenterephthalats sind, so daß eine homogene Verteilung und damit Einfärbung erfolgen kann.

Der Oberflächenglanz der gedeckt eingefärbten, beschichteten Platte, gemessen nach DIN 67530 (Meßwinkel 20°) ist vorzugsweise größer als 70 und die Lichttransmission, gemessen nach ASTM D 1003, ist vorzugsweise kleiner als 5 %.

Darüber hinaus weist die eingefärbte Platte eine gedeckte, homogene Optik auf.

In einer weiteren, bevorzugten Ausführungsform enthält die amorphe Platte ferner mindestens einen UV-Stabilisator als Lichtschutzmittel, wobei die Konzentration des UV-Stabilisators vorzugsweise zwischen 0,01 und 5 Gew.-%, bezogen auf das Gewicht des kristallisierbaren Thermoplasten liegt.

Licht, insbesondere der ultraviolette Anteil der Sonnenstrahlung, d. h. der Wellenlängenbereich von 280 bis 400 nm, leitet bei Thermoplasten Abbauvorgänge ein, als deren Folge sich nicht nur das visuelle Erscheinungsbild infolge von Farbänderung bzw. Vergilbung ändert, sondern auch die mechanisch-physikalischen Eigenschaften negativ beeinflußt werden.

Die Inhibierung dieser photooxidativen Abbauvorgänge ist von erheblicher technischer und wirtschaftlicher Bedeutung, da andernfalls die Anwendungsmöglichkeiten von zahlreichen Thermoplasten drastisch eingeschränkt sind.

Polyethylenterephthalate beginnen beispielsweise schon unterhalb von 360 nm UV-Licht zu absorbieren, ihre Absorption nimmt unterhalb von 320 nm beträchtlich zu und ist unterhalb von 300 nm sehr ausgeprägt. Die maximale Absorption liegt zwischen 280 und 300 nm.

In Gegenwart von Sauerstoff werden hauptsächlich Kettenspaltungen, jedoch keine Vernetzungen beobachtet. Kohlenmonoxid, Kohlendioxid und Carbonsäuren stellen die mengenmäßig überwiegenden Photooxidationsprodukte dar. Neben der direkten Photolyse der Estergruppen müssen noch Oxidationsreaktionen in Erwägung gezogen werden, die über Peroxidradikale ebenfalls die Bildung von Kohlendioxid zur Folge haben.

Die Photooxidation von Polyethylenterephthalaten kann auch über Wasserstoffspaltung in α-Stellung der Estergruppen zu Hydroperoxiden und deren Zersetzungsprodukten sowie zu damit verbundenen Kettenspaltungen führen (H. Day, D. M. Wiles: J. Appl. Polym. Sci 16, 1972, Seite 203).

UV-Stabilisatoren bzw. UV-Absorber als Lichtschutzmittel sind chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für transparente Platten ungeeignet, da sie zur Verfärbung oder Farbänderung führen. Für transparente, amorphe Platten sind nur organische und metallorganische Verbindungen geeignet, die dem zu stabilisierenden Thermoplasten keine oder nur eine extrem geringe Farbe oder Farbänderung verleihen.

Geeignete UV-Stabilisatoren als Lichtschutzmittel sind beispielsweise 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine und Triazine, wobei die 2-Hydroxybenzotriazole und die Triazine bevorzugt sind.

In einer besonders bevorzugten Ausführungsform enthält die erfindungsgemäße, amorphe Platte als Hauptbestandteil ein kristallisierbares Polyethylenterephthalat und 0,01 Gew.-% bis 5,0 Gew.-% 2-(4,6-Diphenyl-1,3,5-triazin-2-yl)-5-(hexyl)oxy-phenol oder 0,01 Gew.-% bis 5,0 Gew.-% 2,2'-Methylen-bis(6-(2H-benzotriazol-2-yl)-4-(1,1,3,3-tetramethylbutyl)-phenol. In einer bevorzugten Ausführungsform können auch Mischungen dieser beiden UV-Stabilisatoren oder Mischungen von mindestens einem dieser beiden UV-Stabilisatoren mit anderen UV-Stabilisatoren eingesetzt werden, wobei die Gesamtkonzentration an Lichtschutzmittel vorzugsweise zwischen 0,01 Gew.-% und 5,0 Gew.-%, bezogen auf das Gewicht an kristallisierbarem Polyethylenterephthalat, liegt.

Als Beschichtungssysteme und -materialien kommen alle dem Fachmann bekannten Systeme und Materialien in Frage.

Aus der Vielzahl seien im folgenden beispielhaft einige genannt, ohne daß diese Aufzählung Anspruch auf Vollständigkeit erhebt.
(1) So werden in der US-A-4,822,828 wäßrige, strahlungshärtbare Beschichtungszusammensetzungen offenbart, die, jeweils bezogen auf das Gewicht der Dispersion, (A) von 50 bis 85 % eines Silanes mit Vinylgruppen, (B) von 15 bis 50 % eines multifunkionellen Acrylates und gegebenenfalls (C) 1 bis 3 % eines Photoinitiators aufweisen.
(2) Bekannt sind auch anorganische/organische Polymere sog. Ormocere (Organically Modified Ceramics) die Eigenschaften von keramischen Materialien und Polymeren kombinieren. Ormocere werden insbesondere als harte und/oder kratzfeste Beschichtungen auf Polymethylmethacrylat (PMMA) und Polycarbonat (PC) eingesetzt. Die harten Beschichtungen werden auf Basis von Al₂O₃, ZrO₂, TiO₂ oder SiO₂ als Netzwerkformer und Epoxy- oder Methacrylatgruppen mit Si durch ≡Si-C≡ Verbindungen gebunden.
(3) Beschichtungsmittel für Acrylharzkunststoffe und Polycarbonat auf Silikonharzbasis in wässrig-organischer Lösung, die eine besonders hohe Lagerstabilität besitzen werden z.B. in der EP-A-0 073 362 und der EP-A-0 073 911 beschrieben. Die Technik verwendet die Kondensationsprodukte von partiell hydrolysierten siliciumorganischen Verbindungen als Beschichtungsmittel, vor allem für Glas und insbesondere für Acrylharzkunststoffe und PC.
(4) Auch bekannt sind acrylhaltige Beschichtungen wie z.B. die Uvecryl Produkte von der Firma UCB Chemicals. Ein Beispiel ist das Uvecryl 29203, welches mit UV-Licht gehärtet wird. Dieses Material besteht aus einer Mischung von Urethanacrylatoligomeren mit Monomeren und Additiven. Bestandteile sind etwa 81% Acrylatoligomere und 19% Hexandioldiacrylat. Diese Beschichtungen werden ebenfalls für PC und PMMA beschrieben.
(5) CVD- oder PVD- Beschichtungstechnologien mit Hilfe eines polymerisierenden Plasmas sowie diamantähnliche Beschichtungen sind in der Literatur bekannt (Dünnschichttechnologie, Herausgegeben von Dr. Hartmut Frey und Dr. Gerhard Kienel, VDI Verlag, Düsseldorf, 1987). Diese Technologien eignen sich insbesondere für Metalle, PC und PMMA.

Andere kommerziell erhältliche Beschichtungen sind z.B. Peeraguard von Peerless, Clearlite und Filtalite von der Fa. Charvo, Beschichtungstypen wie z.B. die UVHC Reihe von GE Silicones, Vuegard wie die 900-er Reihe von TEC Electrical Components, von der Societé Francaise Hoechst Highlink OG series, PPZ® Produkte vertrieben von der Fa. Siber Hegner (hergestellt von Idemitsu) und Beschichtungsmaterialien von Vianova Resins, Toagoshi, Toshiba oder Mitsubishi. Auch diese Beschichtungen sind für PC und PMMA beschrieben.

Beschichtungsverfahren die aus der Literatur bekannt sind, sind z.B. Offset-Drucken, Aufgießen, Tauchverfahren, Flutverfahren, Spritzverfahren oder Sprühverfahren, Rakeln oder Walzen.

Nach den beschriebenen Verfahren aufgebrachte Beschichtungen werden nachträglich beispielsweise mittels UV-Strahlung und/oder thermisch ausgehärtet. Bei den Beschichtungsverfahren kann es von Vorteil sein, die zu beschichtende Oberfläche vorher mit einem Primer, z.B. auf Acrylatbasis oder Acryllatex, zu behandeln.

Weitere bekannte Verfahren sind z.B.:

CVD-Verfahren bzw. Vakuum-Plasma-Verfahren, wie z.B. Vakuum-Plasma Polymerisation, PVD-Verfahren, wie Beschichtung mit Elektronenstrahlverdampfung, widerstandsbeheizte Verdampferquellen oder Beschichtung durch konventionelle Verfahren im Hochvakuum, wie bei einer herkömmlichen Metallisierung.

Literatur zu CVD und PVD ist z.B.: Moderne Beschichtungsverfahren von H.-D. Steffens und W. Brandl. DGM Informationsgesellschaft Verlag Oberursel. Andere Literatur zu Beschichtungen: Thin Film Technology von L. Maissel, R. Glang, McGraw-Hill, New York (1983).

Für den Fachman völlig unerwartet, haben aufwendige Versuchsreihen gezeigt, daß insbesondere die Beschichtungssysteme (1), (2), (4) und (5) hervorragende Ergebnisse für die beschriebenen kristallisierbaren, amorphen Platten liefern, wobei insbesondere das Beschichtungssystem (4) bevorzugt wird.

Als Beschichtungsverfahren eignen sich insbesondere das Gieß-, das Spritz-, das Sprüh-, das Tauch- und das Offsetverfahren, wobei insbesondere bei Beschichtungssystem (4) das Sprühverfahren bevorzugt wird.

Wesentlich für die Beschichtung der amorphen, kristallisierbaren Platten ist, daß die Aushärtung mit UV-Strahlung und/oder Temperaturen, die 80°C nicht überschreiten sollten, erfolgt, wobei die UV-Aushärtung bevorzugt wird.

Völlig unerwartet tritt bei der Beschichtung mit System (4) keine Kristallisation auf, was bedeutet, daß kein signifikanter Trübungsanstieg auftritt. Desweiteren zeigt die Beschichtung eine hervorragende Haftung, hervorragende optische Eigenschaften, eine sehr gute Chemikalienbeständigkeit und keine Beeinträchtigung der Eigenfarbe.

Ganz überraschend wurde weiter festgestellt, daß das Brandverhalten ohne Zusätze von Flammhemmer nicht negativ beeinträchtigt wird.

Desweiteren wurde festgestellt, daß die Lebensdauer der amorphen, kristallisierbaren Platten durch UV-absorbierende Additive in den Beschichtungssystemen verbessert werden kann.

Darüber hinaus wurde festgestellt, daß der Glanz der Oberfläche zwischen ganz matt und hochglänzend eingestellt werden kann.

Durch die überraschende Vielzahl von Eigenschaften eignet sich die erfindungsgemäße, amorphe, kratzfest beschichtete Platte für eine Vielzahl verschiedener Verwendung im Innen-und Außenbereich, beispielsweise für Verglasungen, Verkleidungen, Schutzverglasungen von Maschinen und Fahrzeugen, Trennwände, Displays und Lichtkuppeln.

Die Erfindung wird im folgenden anhand von Ausführungsbeispielen näher erläutert, ohne dadurch beschränkt zu werden.

Die Messung der einzelnen Eigenschaften erfolgt dabei gemäß der folgenden Normen bzw. Verfahren.

### Meßmethoden;

### Oberflächenglanz:

Der Oberflächenglanz wird nach DIN 67 530 bestimmt. Gemessen wird der Reflektorwert als optische Kenngröße für die Oberfläche einer Platte. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert beziehungsweise gestreut. Die auf den photoelektronischen Empfänger auffallenden Lichtstrahlen werden als proportionale elektrische Größe angezeigt. Der Meßwert ist dimensionslos und muß mit dem Einstrahlwinkel zusammen angegeben werden.

### Lichttransmission:

Unter der Lichttransmission ist das Verhältnis des insgesamt durchgelassenen Lichtes zur einfallenden Lichtmenge zu verstehen.
Die Lichttransmission wird mit dem Meßgerät "Hazegard plus" nach ASTM 1003 gemessen.

### Trübung und Clarity:

Trübung ist der prozentuale Anteil des durchgelassenen Lichtes, der vom eingestrahlten Lichtbündel im Mittel um mehr als 2,5° abweicht. Die Bildschärfe wird unter einem Winkel kleiner als 2,5° ermittelt.
Die Trübung und die Clarity werden mit dem Meßgerät "Hazegard plus" nach ASTM 1003 gemessen.

### Oberflächendefekte:

Die Oberflächendefekte werden visuell bestimmt.

### Abriebstest nach Taber:

Der Test der Abriebsfestigkeit wird mit einem Taber-Abraser nach ASTM D 1044 mit 50 Umdrehungszyklen und 100 Umdrehungszyklen, mit CS-17 Reibrädern, einem Belastungsgewicht von 750 g bei einer Umdrehungsgeschwindigkeit von 60 UpM bestimmt.

### Dichte:

Die Dichte wird nach DIN 53479 bestimmt.

### SV (DCE), IV (DCE):

Die Standardviskosität SV (DCE) wird angelehnt an DIN 53726 in Dichloressigsäure (SV) gemessen.

Die intrinsische Viscosität IV (DCE) berechnet sich wie folgt aus der Standardviskosität (SV):${\text{IV (DCE) = 6,67 · 10}}^{\text{-4}} \text{SV (DCE) + 0,118}$

### Thermische Eigenschaften:

Die thermischen Eigenschaften wie Kristallitschmelzpunkt Tₘ, Kristallisationstemperaturbereich Tc, Nach-(Kalt-) Kristallisationstemperatur T_{CN} und Glasübergangstemperatur T_{g} werden mittels Differential Scanning Calorimetrie (DSC) bei einer Aufheizgeschwindigkeit von 10°C/min gemessen.

### Molekulargewicht, Polydispersität:

Die Molekulargewichte M_{w} und Mₙ und die resultierende Polydispersität M_{w}/Mₙ werden mittels Gelpermeationschromatographie (GPC) gemessen.

In den nachstehenden Beispielen und Vergleichsbeispielen handelt es sich jeweils um einschichtige Platten unterschiedlicher Dicke.

### Beispiel 1

Das Polyethylenterephthalat, aus dem die transparente Platte hergestellt wird, hat eine Standardviskosität SV (DCE) von 1010, was einer intrinsischen Viskosität IV (DCE) von 0,79 dl/g entspricht. Der Feuchtigkeitsgehalt liegt bei < 0,2% und die Dichte (DIN 53479) bei 1,41 g/cm³. Die Kristallinität beträgt 59%, wobei der Kristallitschmelzpunkt nach DSC-Messungen bei 258°C liegt. Der Kristallisationstemperaturbereich T_{c} liegt zwischen 83°C und 258°C, wobei die Nachkristallisationstemperatur (auch Kaltkristallisationstemperatur) T_{CN} bei 144°C liegt. Die Polydispersität M_{w}/Mₙ des Polyethylenterephthalats beträgt 2,14.

Die Glasübergangstemperatur liegt bei 83°C.

Vor der Extrusion wird das Polyethylenterephthalat 5 Stunden bei 170°C in einem Trockner getrocknet und dann in einem Einschneckenextruder bei einer Extrusionstemperatur von 286°C durch eine Breitschlitzdüse auf einen Glättkalander dessen Walzen S-förmig angeordnet sind, extrudiert und zu einer 2 mm dicken Platte geglättet. Die erste Kalanderwalze hat eine Temperatur von 73°C und die nachfolgenden Walzen haben jeweils eine Temperatur von 67°C, Die Geschwindigkeit des Abzuges und der Kalanderwalzen liegen bei 6,5 m/min.

Im Anschluß an die Nachkühlung wird die transparente, 2 mm dicke PET-Platte mit Trennsägen oder mit scharfen Messern an den Rändern gesäumt, abgelängt und gestapelt.

Die hergestellte, transparente PET-Platte hat folgendes Eigenschaftsprofil:
- Dicke : 2 mm
- Oberflächenglanz 1. Seite : 200
- (Meßwinkel 20°) 2. Seite : 198
- Lichttransmission : 91%
- Clarity (Klarheit) : 100%
- Trübung : 1,5%
- Oberflächendefekte pro m²
   (Stippen, Orangenhaut, Blasen usw.) : keine
- Kaltformbarkeit : gut, keine Defekte
- Kristallinität : 0%
- Dichte : 1.33 g/cm³

Die hergestellte Platte wird mit einer 8 µm dicken Schicht im Sprühverfahren beschichtet und anschließend 60 Sekunden bei einer Wellenlänge von 254 nm UV-gehärtet. Die Beschichtung, die aufgebracht wurde, besteht aus 81 % Acrylatoligomer und zu 19% aus Hexandioldiacrylat. Die kratzfestbeschichtete Platte hat eine Lichttransmission von 89%.

In den folgenden Tabellen 1a und 1b sind die Meßwerte für Glanz und Trübung der beschichteten und der unbeschichteten Platte vor dem Taber-Abriebstest (sog. ungekratzte Probe) sowie nach 50 bzw. 100 Umdrehungszyklen bei einer Umdrehungsgeschwindigkeit von 60 UpM und einem Belastungsgewicht von 750 g gegenübergestellt.

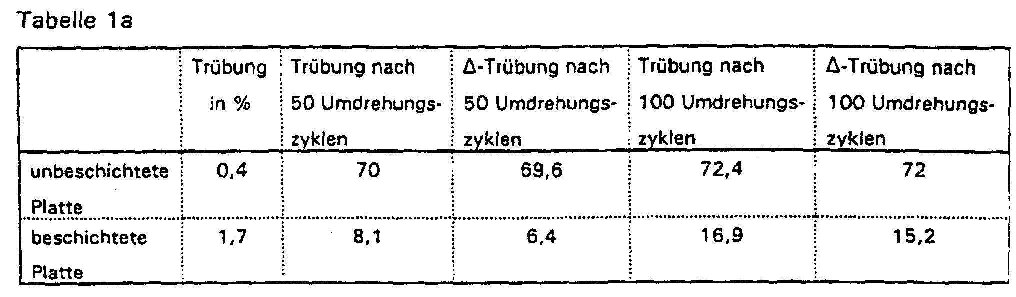

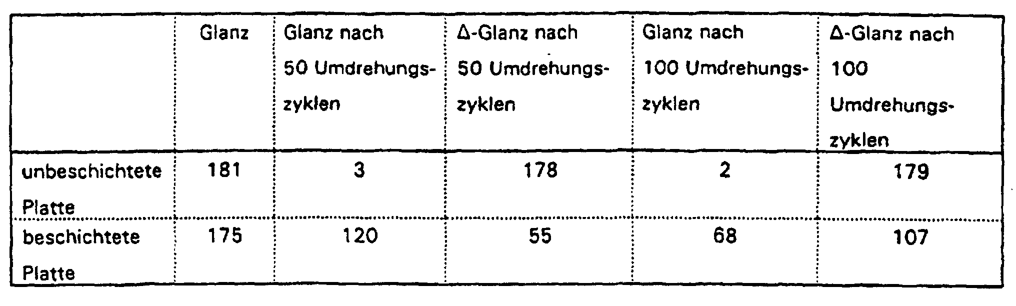

### Beispiel 2

Es wird eine 3 mm dicke, weiß eingefärbte, amorphe Platte hergestellt, die als Hauptbestandteil das Polyethylenterephthalat aus Beispiel 1 und 6 Gew.-% Titandioxid enthält.

Das Titandioxid ist vom Rutiltyp und ist mit einer anorganischen Beschichtung aus Al₂O₃ und mit einer organischen Beschichtung aus Polydimethylsiloxan gecoatet. Das Titandioxid hat einen mittleren Teilchendurchmesser von 0,2 µm.

Das Titandioxid wird in Form eines Masterbatches zugegeben. Das Masterbatch setzt sich aus 30 Gew.-% des beschriebenen Titandioxides und 70 Gew.-% des beschriebenen Polyethylenterephthalats zusammen.

Vor der Extrusion werden 80 Gew.-% des Polyethylenterephthalats und 20 Gew.-% des Titandioxid-Masterbatches 5 Stunden bei 170°C in einem Trockner getrocknet und dann in einem Einschneckenextruder bei einer Extrusionstemperatur von 286°C durch eine Breitschlitzdüse auf einen Glättkalander, dessen Walzen S-förmig angeordnet sind, extrudiert und zu einer 3 mm dicken Platte geglättet. Die erste Kalanderwalze hat eine Temperatur von 73°C und die nachfolgenden Walzen haben jeweils eine Temperatur von 67°C. Die Geschwindigkeit des Abzuges und der Kalanderwalzen liegt bei 6,5 m/min.

Nach der Nachkühlung wird die weiße, 3 mm dicke PET-Platte mit Trennsägen oder scharfen Messern an den Rändern gesäumt, abgelängt und gestapelt. Die hergestellte, weiß eingefärbte Platte hat folgendes Eigenschaftsprofil:
- Dicke : 3 mm
- Oberflächenglanz 1. Seite : 128
- (Meßwinkel 20°) 2. Seite : 127
- Lichttransmission : 0%
- Weißgrad : 110%
- Einfärbung : weiß, homogen
- Oberflächendefekte pro m²
   (Stippen, Orangenhaut, Blasen usw.) : keine
- Kristallinität : 0%
- Dichte : 1,33 g/cm³

Die hergestellte Platte wird mit einer 8 µm dicken Schicht im Sprühverfahren beschichtet und anschließend 60 Sekunden bei einer Wellenlänge von 254 nm UV-gehärtet. Die Beschichtung, die aufgebracht wurde, besteht aus 81 % Acrylatoligomer und zu 19% aus Hexandioldiacrylat. Die Lichttransmission liegt bei 0%.

In der folgenden Tabelle 2a sind die Meßwerte für Glanz der beschichteten und der unbeschichteten Platte vor dem Taber-Abriebstest (sog. ungekratzte Probe) sowie nach 50 bzw. 100 Umdrehungszyklen bei einer Umdrehungsgeschwindigkeit von 60 UpM und einem Belastungsgewicht von 750 g gegenübergestellt.

**Tabelle 2a**

| | Glanz | Glanz nach 50 Umdrehungszyklen | Δ-Glanz nach 50 Umdrehungszyklen | Glanz nach 100 Umdrehungszyklen | Δ-Glanz nach 100 Umdrehungszyklen |
|---|---|---|---|---|---|
| unbeschichtete Platte | 103 | 2 | 101 | 2 | 101 |
| beschichtete Platte | 97 | 60 | 37 | 35 | 62 |

### Beispiel 3

Es wird eine 4 mm dicke, transparent eingefärbte, amorphe Platte hergestellt, die als Hauptbestandteil das Polyethylenterephthalat aus Beispiel 1 und 2 Gew.-% des löslichen Farbstoffes Solventrot 138, ein Anthrachinonderivat der Fa. BASF (®Thermoplast G) enthält.

Der lösliche Farbstoff Solventrot 138 wird in Form eines Masterbatches zugegeben. Das Masterbatch setzt sich aus 20 Gew.-% des beschriebenen Solventrot 138 und 80 Gew.-% des beschriebenen Polyethylenterephthalats zusammen.

Vor der Extrusion werden 90 Gew.-% des Polyethylenterephthalats und 10 Gew.-% des Titandioxid-Masterbatches 5 Stunden bei 170°C in einem Trockner getrocknet und dann in einem Einschneckenextruder bei einer Extrusionstemperatur von 286°C durch eine Breitschlitzdüse auf einen Glättkalander, dessen Walzen S-förmig angeordnet sind, extrudiert und zu einer 4 mm dicken Platte geglättet. Die erste Kalanderwalze hat eine Temperatur von 65°C und die nachfolgenden Walzen haben jeweils eine Temperatur von 58°C. Die Geschwindigkeit des Abzuges und der Kalanderwalzen liegt bei 3,5 m/min.

Nach der Nachkühlung wird die transparent eingefärbte, 4 mm dicke PET-Platte mit Trennsägen oder scharfen Messern an den Rändern gesäumt, abgelängt und gestapelt.

Die hergestellte, rot-transparent eingefärbte Platte hat folgendes Eigenschaftsprofil:
- Dicke : 4 mm
- Oberflächenglanz 1. Seite : 130
- (Meßwinkel 20°) 2. Seite : 127
- Lichttransmission : 35,8%
- Clarity (Klarheit) : 99,1 %
- Trübung : 3,5%
- Oberflächendefekte pro m²
   (Stippen, Orangenhaut, Blasen usw.) : keine
- Kaltformbarkeit : gut, keine Defekte
- Kristallinität : 0%
- Dichte : 1,33 g/cm³

Die hergestellte Platte wird mit einer 8 µm dicken Schicht im Sprühverfahren beschichtet und anschließend 60 Sekunden bei einer Wellenlänge von 254 nm UV-gehärtet. Die Beschichtung, die aufgebracht wurde, besteht aus 81% Acrylatoligomer und zu 19% aus Hexandioldiacrylat. Die Lichttransmission der beschichteten Platte liegt bei 34,6%.

In der folgenden Tabelle 3a sind die Meßwerte für Glanz der beschichteten und der unbeschichteten Platte vor dem Taber-Abriebstest (sog. ungekratzte Probe) sowie nach 50 bzw. 100 Umdrehungszyklen bei einer Umdrehungsgeschwindigkeit von 60 UpM und einem Belastungsgewicht von 750 g gegenübergestellt.

**Tabelle 3a**

| | Glanz | Glanz nach 50 Umdrehungszyklen | Δ-Glanz nach 50 Umdrehungszyklen | Glanz nach 100 Umdrehungszyklen | Δ-Glanz nach 100 Umdrehungszyklen |
|---|---|---|---|---|---|
| unbeschichtete Platte | 124 | 1 | 123 | 1 | 123 |
| beschichtete Platte | 118 | 75 | 43 | 42 | 76 |

## Patentansprüche

1. Amorphe Platte mit einer Dicke im Bereich von 1 bis 20 mm, die als Hauptbestandteil einen kristallisierbaren Thermoplast enthält, **dadurch gekennzeichnet, daß** die Platte mindestens einseitig eine siliciumhaltige und/oder acrylhaltige Beschichtung aufweist.

2. Platte gemäß Anspruch 1, **dadurch gekennzeichnet, daß** die Dicke der Beschichtung im Bereich von 1 bis 50 µm liegt.

3. Platte gemäß Anspruch 1 oder 2, **dadurch gekennzeichnet, daß** der kirstallisierbare Thermoplast Polyethylenterephthalat, Polybutylenterephthalat, Polyethylennaphthalat und/oder Polybutylennaphthalat ist.

4. Platte gemäß Anspruch 3, **dadurch gekennzeichnet, daß** der kirstallisierbare Thermoplast Polyethylenterephthalat ist.

5. Platte gemäß mindestens einem der Ansprüche 1 bis 4, **dadurch gekennzeichnet, daß** sie mindestens einen im kristallisierbaren Thermoplast löslichen Farbstoff enthält.

6. Platte gemäß mindestens einem der Ansprüche 1 bis 5, **dadurch gekennzeichnet, daß** sie mindestens ein organisches und/oder anorganisches Pigment als Farbmittel enthält.

7. Platte gemäß mindestens einem der Ansprüche 1 bis 6, **dadurch gekennzeichnet, daß** sie mindestens einen UV-Stabilisator als Lichtschutzmittel enthält.

8. Platte gemäß mindestens einem der Ansprüche 1 bis 7, **dadurch gekennzeichnet, daß** die Platte mindestens einseitig eine acrylhaltige Beschichtung aufweist.

## Claims

1. Amorphous plate with a thickness in the range of 1 to 20 mm, which contains a crystallisable thermoplastic as main component, **characterised in that** the plate has, at least on one side, a silicon- and/or acrylic-containing coating.

2. Plate according to claim 1, **characterised in that** the thickness of the coating is in the range of 1 to 50 µm.

3. Plate according to claim 1 or 2, **characterised in that** the crystallisable thermoplastic is polyethylene terephthalate, polybutylene terephthalate, polyethylene naphthalate and/or polybutylene naphthalate.

4. Plate according to claim 3, **characterised in that** the crystallisable thermoplastic is polyethylene terephthalate.

5. Plate according to at least one of claims 1 to 4, **characterised in that** it contains at least one dye soluble in the crystallisable thermoplastic.

6. Plate according to at least one of claims 1 to 5, **characterised in that** it contains at least one organic and/or inorganic pigment as dye.

7. Plate according to at least one of claims 1 to 6, **characterised in that** it contains at least one UV stabiliser as light stabiliser.

8. Plate according to at least one of claims 1 to 7, **characterised in that** the plate has, at least on one side, an acrylic-containing coating.

## Revendications

1. Plaque amorphe présentant une épaisseur dans le domaine de 1 à 20 mm, qui contient en tant que constituant principal un thermoplastique cristallisable, **caractérisée en ce que** la plaque présente au moins d'un côté un revêtement au silicium et/ou à l'acrylate.

2. Plaque selon la revendication 1, **caractérisée en ce que** l'épaisseur du revêtement est située dans le domaine de 1 à 50 µm.

3. Plaque selon la revendication 1 ou 2, **caractérisée en ce que** le thermoplastique cristallisable est le poly(téréphtalate d'éthylène), le poly(téréphtalate de butylène), le poly(naptalate d'éthylène) et/ou le poly(naphtalate de butylène).

4. Plaque selon la revendication 3, **caractérisée en ce que** le thermoplastique cristallisable est le poly(téréphtalate d'éthylène).

5. Plaque selon au moins l'une des revendications 1 à 4, **caractérisée en ce qu'**elle contient au moins un colorant soluble dans le thermoplastique cristallisable.

6. Plaque selon au moins l'une des revendications 1 à 5, **caractérisée en ce qu'**elle contient au moins un pigment organique et/ou inorganique en tant que colorant.

7. Plaque selon au moins l'une des revendications 1 à 6, **caractérisée en ce qu'**elle contient au moins un stabilisant UV en tant qu'agent photoprotecteur.

8. Plaque selon au moins l'une des revendications 1 à 7, **caractérisée en ce que** la plaque présente au moins d'un côté un revêtement à base d'acrylate.
